# EUROPEAN PATENT SPECIFICATION

(11) **EP 4 452 613 B1**
(45) Date of publication and mention of the grant of the patent: **19.11.2025**
(21) Application number: 22838955.7
(22) Date of filing: 14.12.2022
(51) Int. Cl.: B29D 30/24

(54) **PROCESS AND APPARATUS FOR MANUFACTURING ANNULAR COMPONENTS OF TYRES FOR VEHICLE WHEELS**
VERFAHREN UND VORRICHTUNG ZUR HERSTELLUNG VON RINGFÖRMIGEN REIFENBESTANDTEILEN FÜR FAHRZEUGRÄDER
PROCESSUS ET APPAREIL DE FABRICATION DE COMPOSANTS ANNULAIRES DE PNEUS POUR ROUES DE VÉHICULE

(30) Priority: 21.12.2021 IT 202100031901
(43) Date of publication of application: 30.10.2024
(73) Proprietor: Pirelli Tyre S.p.A., 20126 Milano (IT)
(72) Inventor: DE COL, Christian, 20126 MILANO (IT); PORTINARI, Gianni Enrico, 20126 MILANO (IT); BOSIO, Gian Luigi, 20126 MILANO (IT)
(74) Representative: Tansini, Elio Fabrizio
(86) International application number: PCT/IB2022/062210
(87) International publication number: WO 2023/119068

(56) References cited:
- EP-A1- 2 860 022
- WO-A1-2019/116292
- JP-A- 2010 284 846

## Description

The present invention relates to a process for manufacturing annular components of tyres for vehicle wheels and an apparatus usable in the actuation of such process.

More particularly, the invention is mainly directed for building green tyres, to be subsequently subjected to a vulcanisation cycle for the obtainment of the final product.

A tyre for vehicle wheels generally comprises a carcass structure comprising at least one carcass ply respectively having opposite ends engaged with respective anchoring annular structures (bead cores), integrated in the zones normally identified with the name "beads", having an internal diameter substantially corresponding to a so-called "fitting diameter" of the tyre on a respective mounting rim.

The carcass structure is associated with a crown structure which can comprise one or more belt layers, situated in radial superimposition on each other and with respect to the carcass ply, having metallic or textile reinforcement cords with cross orientation and/or substantially parallel to the circumferential extension direction of the tyre (at 0 degrees). In radially outer position with respect to the belt layers, a tread band is applied, also made of elastomeric material like other semifinished products constituting the tyre.

Sidewalls made of elastomeric material are also applied in axially outer position on the lateral surfaces of the carcass structure, each extended from one of the lateral edges of the tread band up to the respective anchoring annular structure to the beads. In the tyres of "tubeless" type, an air impermeable coating layer, normally termed "liner", covers the inner surfaces of the tyre.

After the building of the green tyre actuated through assembly of respective components, a moulding and vulcanisation treatment is generally executed that is aimed for determining the structural stabilization of the tyre through crosslinking of the elastomeric compositions as well for imparting on the same, if requested, a desired tread design and possible distinctive graphic marks at the sidewalls.

By "annular component" of a tyre it is intended a green tyre or any one component thereof shaped as a ring around a central axis coinciding with the rotation axis of the tyre itself. The following are for example annular components: the carcass ply/plies, the bead cores, the tread band, the belt layer/layers, the tread band, the sidewalls, as well as an assembly composed of two or more of such mutually coupled components, such as for example the carcass structure comprising at least one carcass ply associated with the bead cores, and the crown structure comprising at least one or more belt layers and the tread band.

The terms "radial" and "axial" and the expressions "radially inner/outer" and "axially inner/outer" are used with reference to the radial direction of the drum used and/or of the annular tyre component being processed (i.e. to a direction perpendicular to a central geometric axis with respect to said drum and/or annular component) and to the axial direction of the drum used and/or of the annular tyre component (i.e. to a direction parallel to said central axis). The terms "circumferential" and "circumferentially" are instead used with reference to the annular extension of the aforesaid drum and/or of the annular component.

US2012/0318460 describes a drum usable for manufacturing tyres, comprising a cylindrical unit formed by curved segments transversely movable in radial direction with respect to a rotation axis of the drum in order to modify the external diameter of the drum. Provided for are a series of external segments and a series of internal segments respectively alternated along the periphery of the cylindrical unit. With the contraction of the external diameter of the drum, the two types of segments are separated from each other. In the expanded condition the assembly of all the segments defines a substantially closed circular cylinder, lacking spaces between contiguous segments, in order to allow the processing of the tyre. In the contracted condition the external diameter is instead defined by only the external segments, while the internal segments are situated inside the cylindrical unit. The reduced diameter of the cylindrical unit in the contracted condition facilitates the removal of the tyre from the drum.

WO2015/194940-A1 and WO2020/160012-A1 illustrate other examples of drums provided with expandable segments for processing tyre components.

In the document WO 2012/146988, the Applicant has verified the possibility to attain the crown structure by a process in which, on a so-called auxiliary drum, an annular semifinished product is formed comprising a first radially inner belt layer and at least one second radially outer belt layer. Opposite axially terminal portions of the first belt layer are then turned up on said at least one second radially outer belt layer. The belt layers are then transferred on a service drum comprising radially movable sectors, which is adapted to be radially expanded so as to engage the belt layers. The service drum, in the radial expansion condition, can have an external surface shaped according to a curvilinear cross section profile, so as to attain a desired shaping to the belt layers engaged thereon, by imparting a radial expansion thereto, along the circumferential direction.

EP 2860022 A1 and JP 2010284846 A disclose examples of forming drums having circumferentially alternated first segments and second segments radially sequentially movable between a contracted position and an expanded position. A sheeted material is wound on the outer surface defined by the first and second segments in their expanded position, to form a cylindrical tyre member. Then, the first and second segments are moved in the contracted position and the tyre member is axially removed from the drum.

The Applicant has observed that, in some annular components, the correct execution of the shaping treatment according to the state of the art encounters several difficulties, particularly evident where the structure and/or the materials used contribute to increasing the rigidity of the semifinished products, obstructing the deformability thereof for the purpose of shaping. A high structural non-extensibility of the semifinished products can in fact obstruct the expansion of the sectors of the drum employed, rendering it difficult to obtain the shaping, with the risk of inducing excessive stresses on the structural components of the drum itself and/or on the same semifinished products.

The Applicant has also observed that the progressive radial expansion of the sectors of the employed drum causes, in addition to a corresponding radial expansion of the belt layers, a circumferential dilation thereof. If the sectors have a curved profile, this phenomenon typically starts in proximity to the axial middle line plane of the belt layers, where there is the initial contact with the sectors, before then being progressively extended towards the axially outer edges. In the processing of crown structures, the reinforcement cords that constitute the belt layers tend to facilitate this radial and circumferential dilation by progressively changing their orientation with respect to the circumferential direction, causing a narrowing of the overall width of the crown structure. Due to the friction created between the surfaces of the semifinished product and of the sectors in mutual contact, these deformations can in specific circumstances be more accentuated in the spaces comprised between one sector and the next, giving rise to undesired structural discontinuities in the product.

The Applicant has also observed that with the use of sectors with curved profile, the crown structure can also have a nonuniform expansion degree along the radial section at the end of the shaping. Such expansion degree can in fact vary between a maximum expansion degree in proximity to an axial middle line plane, and a minimum expansion degree in proximity to the axially outer edges. Due to the abovementioned expansion difficulties, the minimum expansion might be zero or in any case insufficient.

The Applicant has finally observed that the above-described dynamics impart relative sliding between the radially inner surface of the belt layers and the sectors of the drum employed.

More particularly, the Applicant has perceived that such sliding can be minimised by entrusting the shaping to at least two series of sectors that expand the annular semifinished product coming into contact with the radially inner surface of the latter in two or more different moments.

The Applicant has finally found that by making an expandable/contractable drum provided with at least first sectors and second sectors interspersed around a central axis in which the first sectors and the second sectors reach the expanded condition at different moments, one obtains the solution to the abovementioned problems.

In accordance with a first aspect, the invention relates to a process for manufacturing annular components of tyres, according to claim 1.

In accordance with a further aspect, the invention relates to an apparatus for manufacturing annular components of tyres, according to claim 9.

The Applicant deems that the engagement of the radially inner surface of the semifinished product at different moments, respectively by the first sectors and by the second sectors, allows facilitating the relative sliding between the same sectors and the radially inner surface of the annular semifinished product during shaping. In particular the semifinished product, in the intermediate zones between one of the first sectors and the next that are expanded in an initial transient of the shaping, remains free to be deformed in order to adapt its shape and size without sliding on the other sectors. The subsequent expansion of the second sectors involves a new expansion.

The aforesaid expansion subsequently set on said intermediate zones of the semifinished product, with the expansion of the second sectors, causes a lightening or cancelling of the contact pressure of the semifinished product on the first sectors, so as to facilitate a uniform shaping of the semifinished product on the entire circumferential extension. In at least one of the aforesaid aspects, convenient embodiments of the invention can comprise one or more of the following preferred characteristics.

Preferably, the first and the second sectors act against the radially inner surface of the semifinished product by respective radially outer contact surfaces.

Preferably, during the expansion of the first sectors and second sectors, the annular semifinished product is shaped according to a curved cross section profile, in accordance with said contact surfaces.

Preferably, in the radially contracted condition the first sectors and the second sectors have the same radial position.

In a different preferred solution, in the radially contracted condition the first sectors and the second sectors have different radial positions.

Preferably, the second sectors reach the expanded condition after the first sectors have reached the expanded condition.

Preferably, expanding the first sectors and the second sectors comprises bringing the first sectors to the expanded condition, in order to impose a first radial expansion on the annular semifinished product.

Preferably, expanding the first sectors and the second sectors subsequently comprises bringing the second sectors to the expanded condition, in order to impose, on the annular semifinished product, a further radial expansion in respective intermediate zones interposed between the first sectors.

Preferably, the expansion of the second sectors starts before the first sectors have reached the expanded condition.

In such a manner it is possible to reduce the times required for completing the radial expansion of the first sectors and second sectors.

Preferably, the expansion of the second sectors starts simultaneously with the start of the expansion of the first sectors.

Preferably, the expansion of the first sectors and/or second sectors comprises an initial transient in which the first sectors and/or the second sectors are moved away from the contracted condition at a first expansion speed, and a subsequent transient in which the same first sectors and/or the second sectors reach the expanded condition at an expansion speed lower than that of the initial transient.

The Applicant deems that a management of the movement according to differentiated speeds allows reducing the processing times. The transients in which the expansion occurs at reduced speed are in fact limited to the final instants of the expansion, where the forces to transmit to the annular semifinished product are greater. Finally, the radial movement of the sectors at greater speed is preferably used in the steps in which the process does not require a high radial force.

Preferably, the expansion of the second sectors comprises a terminal transient during which the first sectors remain in the respective expanded condition.

It is thus possible to stabilise the semifinished product on the first expanded sectors, before completing the expansion of the second sectors.

Preferably, the first sectors and the second sectors operate in thrust relationship against a radially inner surface of the annular semifinished product.

Preferably, the radial expansion of the first sectors and of the second sectors between the contracted condition and the expanded condition has at least one intermediate transient in which radially outer contact surfaces of the second sectors are spaced from the central axis according to a measurement greater than the distance of radially outer contact surfaces of the first sectors from the central axis.

Preferably, the expansion of the first sectors and of the second sectors between the contracted condition and the expanded condition has at least one intermediate transient in which the second sectors act in thrust relationship against a radially inner surface of the annular semifinished product with greater intensity with respect to the first sectors.

The contact of the semifinished product is therefore alternately exchanged between the first sectors and the second sectors, facilitating the adaptation of the semifinished product itself to the deformations set during the radial expansion with a convenient reduction of the friction and of the internal structural tensions induced in the semifinished product itself.

Preferably, during the intermediate transient the first sectors are spaced from the radially inner surface of the annular semifinished product.

The semifinished product thus has the possibility to release the internal tensions previously produced by the friction against the first sectors, being adapted to the shaping set during the radial expansion.

Preferably, the radial expansion of the first sectors and of the second sectors between the contracted condition and the expanded condition has at least one intermediate transient in which the second sectors and the first sectors selectively act in contact against the radially inner surface of the annular semifinished product with mutually alternated intermittence. A repetition for two or more times of the contact exchange of the semifinished product on the first sectors and on the second sectors can further facilitate the adaptation of the semifinished product during the radial expansion, reducing possible increases of the size of the deformations set on the latter without inducing over-stresses on the same and/or on the mechanical components of the drum.

Preferably, during the intermediate transient the radially inner surface of the annular semifinished product alternatively comes into contact with the second sectors and with the first sectors.

Preferably, each of the first sectors operates against a portion of the annular semifinished product having circumferential extension smaller than a circumferential extension of a portion of the annular semifinished product, against which each of the second sectors operates.

According to the Applicant, the consequent limitation of the contact areas between semifinished product and first sectors, makes it possible to increase the capacity of adaptation of the semifinished product itself to the deformations set by the radial expansion.

Preferably, in the expanded condition the first sectors and the second sectors engage the radially inner surface of the annular semifinished product in a substantially uniform manner along the entire circumferential extension thereof. Preferably, the annular semifinished product is attained by winding of said one or more layers around the drum with the sectors in contracted condition.

Preferably, the annular semifinished product is axially fit around the drum with the sectors in contracted condition.

Preferably, said actuator comprises a thrust ring arranged concentrically with respect to the central axis and axially movable with respect to the first sectors and to the second sectors.

Preferably, said actuator comprises first cam elements borne by the thrust ring and each operating on one of said first sectors.

Preferably, said actuator comprises second cam elements borne by the thrust ring and each operating on one of said second sectors.

Preferably, the first cam elements have shape different from that of the second cam elements.

The adoption of a shaping that is respectively different for the first cam elements and the second cam elements allows obtaining the differentiated movement of the sectors by using only one thrust ring.

Preferably the thrust ring can be moved pneumatically, electrically or hydraulically.

Preferably, each of the first cam elements and of the second cam elements acts against the respective first sector and second sector by at least one thrust surface that is tilted with respect to the central axis.

Preferably, the thrust surface of each of the first cam elements has a tilt greater than the thrust surface of each of the second cam elements.

The first cam elements can therefore be moved towards the expanded condition at a speed greater than that of the second cam elements.

Preferably, the thrust surface of each of the first cam elements and/or of the second cam elements has a rectilinear progression at constant tilt starting from a point of minimum lift, corresponding to said radially contracted condition, up to a point of maximum lift corresponding to said radially expanded condition.

Preferably, the thrust surface of each of the first cam elements and/or of the second cam elements has at least two sections having respectively different tilt with respect to the central axis.

It is therefore possible to obtain the movement of the first sectors and/or of the second sectors at variable speed during the approach to the expanded condition.

Preferably, the thrust surface of each of the first cam elements and/or second cam elements has a terminal section substantially parallel to the central axis.

It is thus possible to maintain stationary the first sectors or the second sectors while the second sectors or the first sectors reach the expanded condition.

Preferably, said sections having respectively different tilt are comprised between a point of minimum lift, corresponding to said radially contracted condition, and a point of maximum lift corresponding to said radially expanded condition.

Preferably, each of the first cam elements and/or second cam elements is made in an interchangeable insert that is removably engaged with the thrust ring.

Preferably, the interchangeable insert has a slide track bearing the thrust surface and engaging a slider borne by the respective first sector.

Preferably, said slider is interconnected to the respective first sector by at least one connecting rod extended through a longitudinal slit made in a radially outer portion in the interchangeable insert.

Preferably, the thrust surface of each of the first cam elements and/or second cam elements is defined along a groove made in the thrust ring.

Preferably, the groove is extended for the entire length thereof according to a rectilinear progression at constant tilt between a point of minimum lift and a point of maximum lift close to axially opposite ends of the thrust ring.

Preferably, said groove slidably engages at least one slide fixed in radially inner position to the respective second sector. Preferably, said slide is extended along a radially inner edge of the respective sector, according to a rectilinear progression coinciding with that of the thrust surface.

Preferably, in the radially contracted condition the slide acts against the respective thrust surface substantially for the entire length of the slide and/or of the thrust surface themselves.

Preferably, in the radially expanded condition a contact between said slide and the respective thrust surface is at least partially located in proximity to the point of maximum lift.

In a different preferred embodiment, said groove slidably engages at least one roller fixed in radially inner position to the respective second sector.

Preferably, said thrust ring is slidably guided along a central shaft coaxial with the central axis.

Preferably, the thrust ring is axially movable between two axial containment flanges.

Preferably, axially opposite end edges of each of said first sectors and second sectors are slidably guided along guides borne by axial containment flanges.

Thus, the stability of the axial positioning of the sectors during the movement is facilitated.

Preferably, said guides are extended radially with respect to the central axis.

Preferably, the thrust ring is movable upon action of a pressurised fluid.

Preferably, each of said first sectors and second sectors has a radially outer contact surface, defining a circumferential extension of the same first sector and second sector.

Preferably, the first sectors and the second sectors have respectively different circumferential extensions.

Preferably, each of the first sectors has a circumferential extension smaller than a circumferential extension of each of the second sectors.

The Applicant deems that a lower circumferential extension of the first sectors facilitates the attainment of the expanded condition above all when the structure and/or the materials employed in making the annular semifinished product are such to bring forth significant structural strength. Indeed, a reduced extension of the surfaces of the first sectors in contact with the annular semifinished product corresponds to a greater extension of the zones of the semifinished product itself free to slide and be deformed in response to the expansion.

Preferably, the first and the second sectors have radially outer contact surfaces configured for acting in thrust relationship against the annular semifinished product.

Preferably, in the expanded condition the contact surfaces of the first sectors and of the second sectors are equidistant from the central axis.

Thus, a uniform support of the semifinished product in the expanded condition is facilitated, for greater control of the structural uniformity of the product.

Preferably, the contact surfaces of the first sectors and of the second sectors have a curved profile in a radial plane with respect to the central axis.

Further characteristics and advantages will be more evident from the detailed description of a preferred but not exclusive embodiment of a process for manufacturing annular components of tyres for vehicle wheels, and of an apparatus conveniently usable for operating according to said process, in accordance with the present invention.

Such description will be set forth hereinbelow with reference to the enclosed drawings, provided only as a non-limiting example, in which:

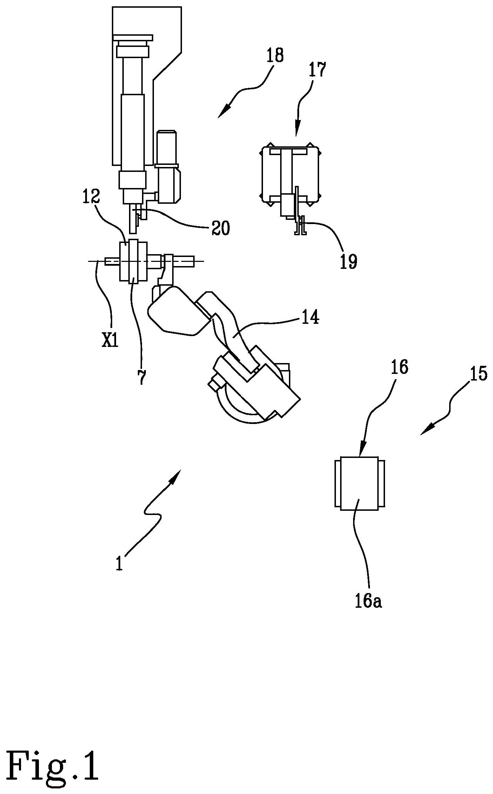

figure 1 schematically shows, in plan view, an apparatus for manufacturing annular components of tyres for vehicle wheels, in accordance with the present invention;
figure 2 shows, in perspective view, a drum used in the present apparatus, in a radially contracted condition;

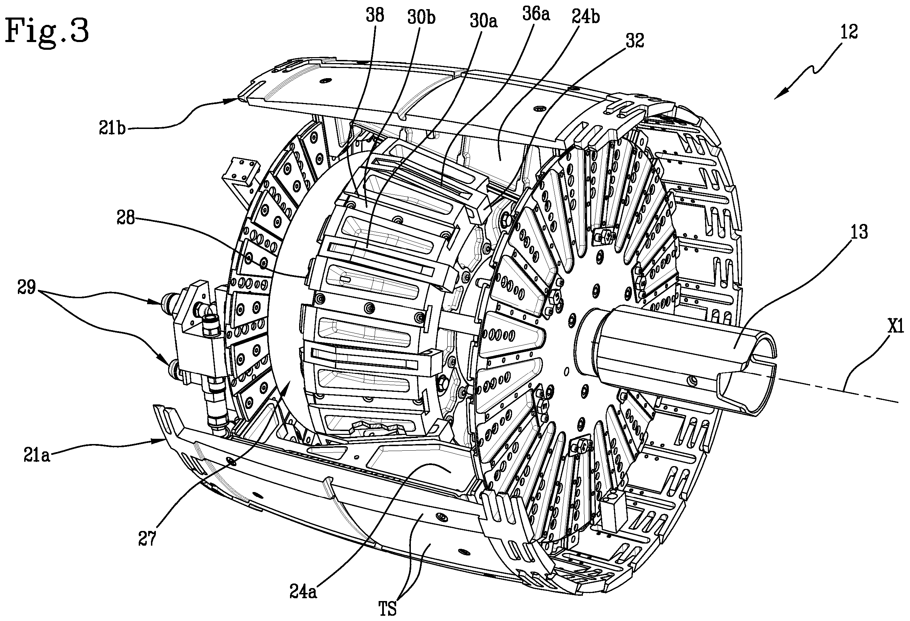

figure 3 shows, in perspective view from an opposite angle with respect to figure 2, the drum in an intermediate condition between the radially contracted condition and a radially expanded condition;
figure 4 shows the drum of figure 3 in the radially expanded condition;
figure 5 shows an enlarged detail of the drum, showing one of the first sectors;
figure 6 shows a further enlarged detail of the drum, showing one of the second sectors;
figure 7 is a diameter section of the drum showing one of the first sectors in radially contracted condition;
figure 8 shows the first sector of figure 7 in radially expanded condition;
figure 9 is a diameter section of the drum showing one of the second sectors in radially contracted condition;
figure 10 shows the second sector of figure 9 in radially expanded condition;
figure 11 schematically shows, in radial half-section, a tyre attainable in accordance with the present invention.

With reference to the abovementioned figures, reference number 1 overall indicates an apparatus for manufacturing annular components of tyres for vehicle wheels, arranged for actuating a process according to the present invention.

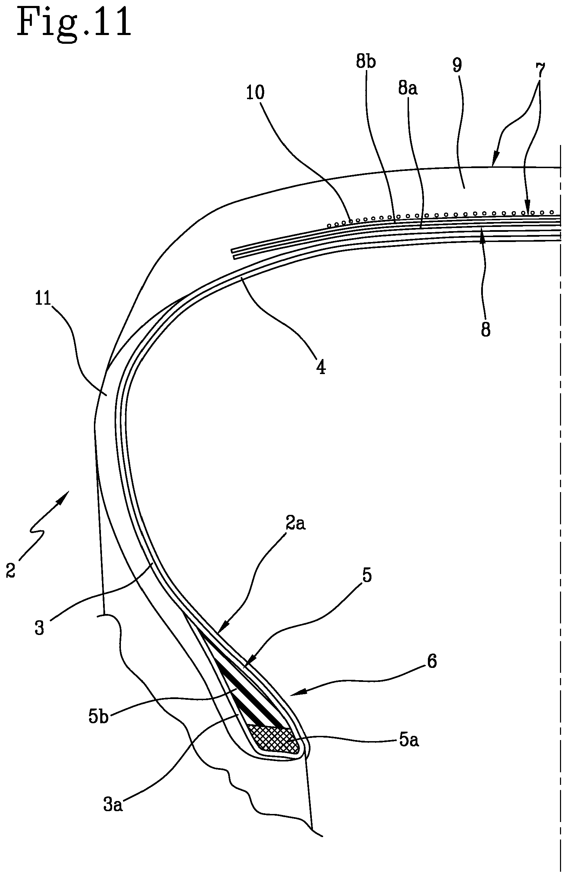

The apparatus 1 is usable for manufacturing tyres 2 (figure 11) essentially comprising a carcass structure 2a having at least one or more carcass plies 3.

An impermeable elastomeric material layer or so-called liner 4 can be applied inside the carcass ply 3. Two anchoring annular structures 5, each comprising a so-called bead core 5a bearing an elastomeric filler 5b in radially outer position, are engaged with respective end flaps 3a of the carcass ply 3. The anchoring annular structures 5 are integrated in proximity to zones normally identified with the name "beads" 6, at which there is normally the engagement of the tyre 2 with a respective mounting rim.

A crown structure 7 is circumferentially applied around the carcass structure 3. The crown structure 7 comprises a belt structure 8 having one or more reinforcement layers 8a, 8b, and preferably a tread band 9 circumferentially superimposed on the belt structure 8.

More particularly, provided in the illustrated example are a first radially inner reinforcement layer 8a, and at least one second radially outer reinforcement layer 8b.

At least one additional belting layer 10, of so-called "zero degree layer" type, p can also be radially superimposed on the reinforcement layers 8a, 8b, in order to confer a desired resistance to circumferential and radial extensibility to the belt structure 8.

Two sidewalls 11, each extended from the corresponding bead 6 to a corresponding lateral edge of the tread band 9, are applied in laterally opposite positions on the carcass ply 3.

In the example described herein, the apparatus 1 is arranged for attaining the belt structure 8 within a tyre 2 building plant, not further described since not relevant for the purpose of the present invention. Nevertheless, the same apparatus 1 can be used or adapted for making any other annular component of the tyre 2, for example for making the carcass structure 3, or another element.

The apparatus 1 comprises at least one drum 12 which in a preferred embodiment has a central shaft 13 coaxial with a central axis of the drum 12 itself. The central shaft 13 is adapted to be engaged by a mover, for example a robotic arm 14, preferably of anthropomorphic type with at least 6 rotation axes, which provides to move and transfer, in a programmed manner, the drum 12 between different work stations, set for executing the respective processing steps for the purpose of the application or manufacturing of one or more annular components of the tyre on the drum 12 itself. In the illustrated example, the robotic arm 14 is adapted to interact with a first work station 15 in which at least one first applicator 16 operates which provides for arranging around the drum 12 at least one of the reinforcement layers 8a, 8b, or another annular semifinished product intended to form a different annular component.

The same robotic arm 14 can also be configured for transferring the drum 12 to a second work station 17 and possibly a third work station 18, for example respectively set for making the additional belting layer 10 and the tread band 9, respectively through a second applicator 19 and a third applicator 20.

Each applicator can be attained in any convenient manner depending on the requirements.

In at least one possible non-illustrated embodiment, the first applicator 16 can comprise a device for dispensing a semifinished product in belt or strip form directly around the drum 12, supported and actuated in rotation by the robotic arm 14 or by a mover of another type. The formation of each reinforcement layer 8a, 8b or another annular semifinished product can be obtained by winding the respective semifinished product according to one or more complete revolutions around a radially outer surface of the drum 12, to form one or more consecutively coupled coils in mutual radial superimposition and/or in mutual axial approach.

In the illustrated example, the first applicator 16 is made in transfer ring form 16a, possibly provided with radially movable elements in order to engage and treat the reinforcement layers 8a, 8b or any other annular semifinished product at the radially outer surface of the latter. In a per se known manner, the transfer ring 16a is adapted to receive the first and the second reinforcement layer 8a, 8b that have been previously formed in any known manner, for example in mutual radial superimposition on an auxiliary cylindrical shaping drum (not illustrated). Said auxiliary drum can be coaxially inserted within the transfer ring 16a in order to transfer the reinforcement layers 8a, 8b to the latter. Subsequently, the auxiliary drum is removed from the transfer ring 16a and, through the robotic arm 14, the drum 12 is adapted to be translated along a central geometric axis X1 thereof, in order to be coaxially inserted in the transfer ring 16a itself bearing the reinforcement layers 8a, 8b such that the latter are arranged around the drum itself.

The second applicator 19 operating in the second work station 17 can in turn be attained in dispenser form, through which a strip-like element or another continuous elongated element integrating one or more reinforcement cords is adapted to be wound according to axially side-by-side coils on the reinforcement layers 8a, 8b borne by the drum 12, actuated in rotation and suitably moved by the robotic arm 14. The third applicator 20 operating in the third work station 18 can for example comprise an extruder, through which a continuous elongated element made of elastomeric material is adapted to be dispensed and wound according to axially side-by-side coils on the belt structure borne by the drum 12 actuated in rotation and moved by the robotic arm 14.

The drum 12 comprises a plurality of first sectors 21a circumferentially distributed around the central axis X1. Interspersed with the first sectors 21a are, in alternated sequence, a plurality of second sectors 21b which are also distributed circumferentially around the central axis X1.

The structural conception of the second sectors 21b corresponds to that of the first sectors 21a with regard to a number of aspects. Therefore, for the purpose of description simplification, corresponding parts of the first sectors 21a and of the second sectors 21b will be indicated with a same reference number, followed by the suffix "a" for the first sectors 21a and by the suffix "b" for the second sectors 21b. Each of the first sectors 21a and second sectors 21b has a terminal plate 22a, 22b defining a radially outer contact surface 23a, 23b, i.e. directed radially away from the central axis X1, configured for acting in thrust relationship against a radially inner surface LS of the reinforcement layers 8a, 8b of the belt structure 8, or another annular semifinished product of the tyre. The contact surfaces 23a, 23b are extended around the central geometric axis X1 in order to each define a circumferential extension of the respective first sector 21a or second sector 21b. Overall, the contact surfaces 23a, 23b of the first sectors 21a and of the second sectors 21b define a radially outer surface TS of the drum 12, intended to act against the radially inner surface LS of the reinforcement layers 8a, 8b. If requested, the contact surfaces 23a, 23b of the first sectors 21a and of the second sectors 21b can have a curved profile in a radial plane with respect to the central axis X1.

Each terminal plate 22a, 22b is fixed, preferably removably, to a base body 24a, 24b having substantially plate-like configuration, lying in a radial plane with respect to the central axis X1 and extended between two axial containment flanges 25, engaged with the central shaft 13 at a predetermine mutual distance. At the base body 24a, 24b, each of the first sectors 21a and second sectors 21b has two axially opposite end edges, slidably guided along respective guides 26 extended radially with respect to the central axis X1, each borne by one of the axial containment flanges 25.

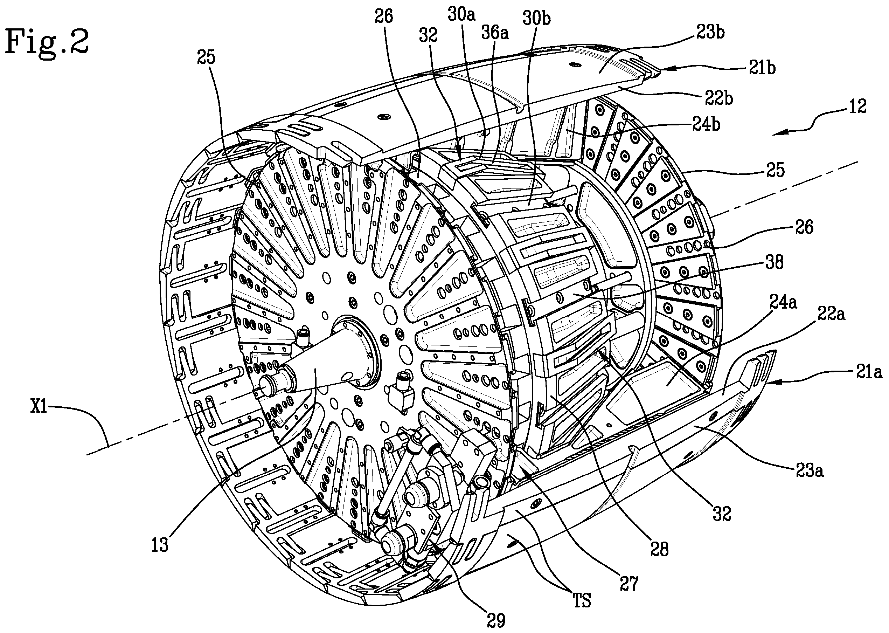

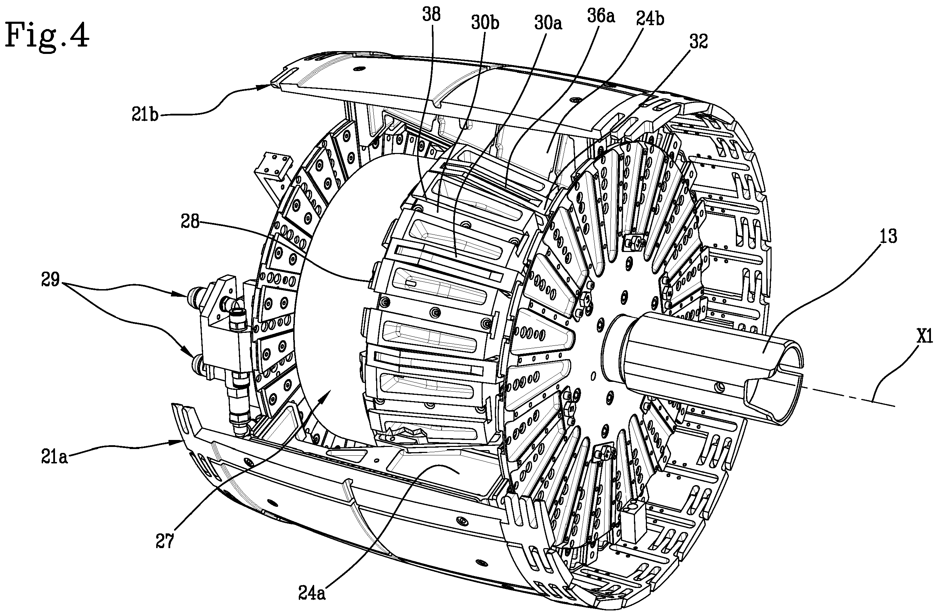

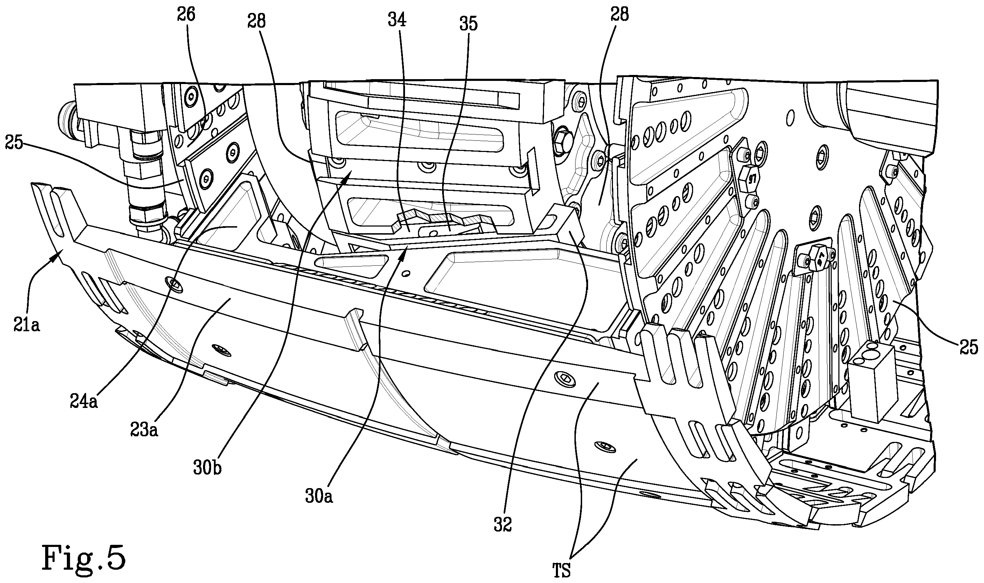

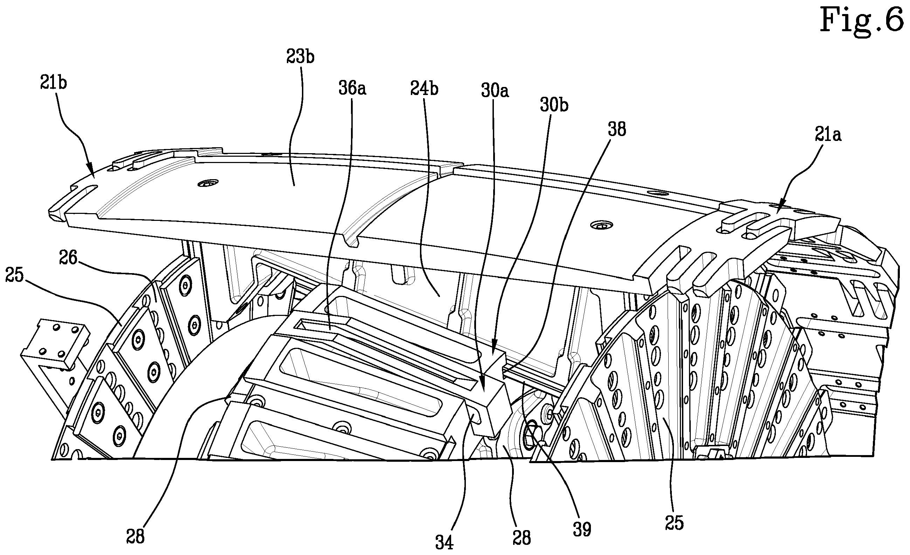

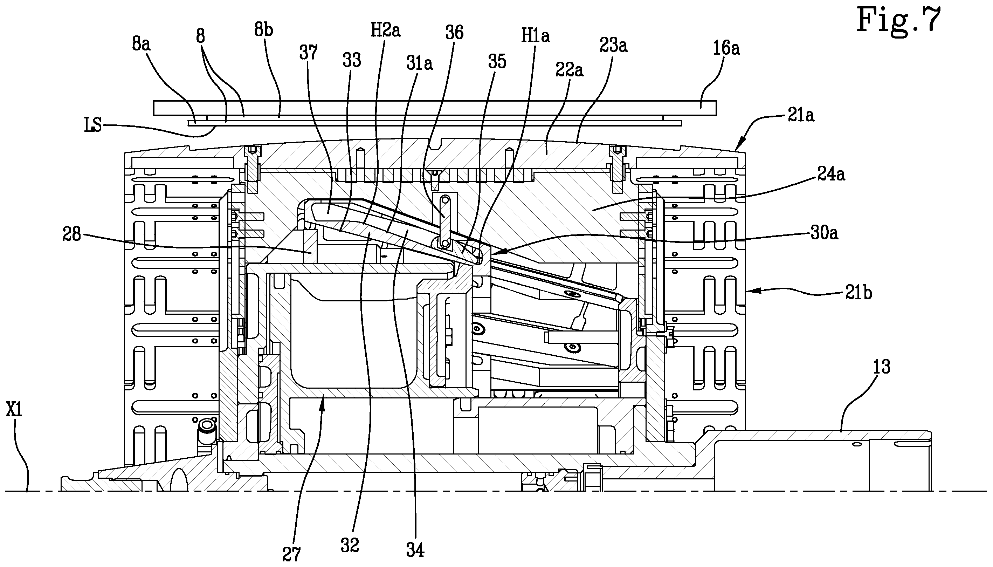

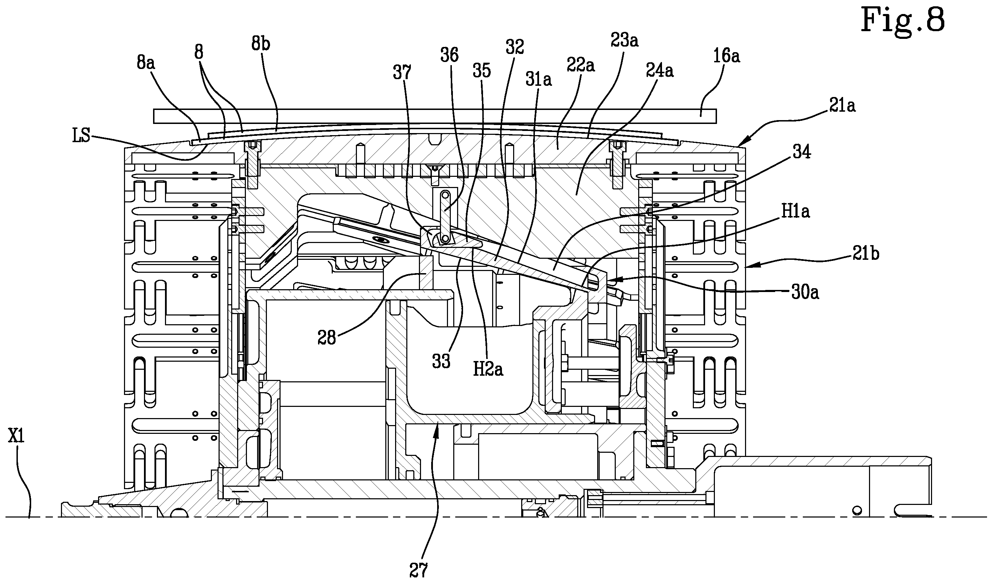

The slidable engagement along the guides 26 confers a radial mobility to each of the first sectors 21a and second sectors 21b, between a radially contracted condition and a radially expanded condition. In the radially contracted condition, represented in figures 2, 5 to 7 and 9, the first sectors 21a and the second sectors 21b are moved close to the central axis X1. In this circumstance, the radially outer surface TS of the drum 12 has a diameter smaller than or equal to an internal diameter detectable on the radially inner surface LS of the reinforcement layers 8a, 8b. In the radially expanded condition, represented in figures 4, 8 and 10, the radially outer surface TS of the drum 12 has a diameter greater than the diameter thereof detectable in the contracted condition. The drum 12 is equipped with at least one actuator 27 operating on the first sectors 21a and on the second sectors 21b, in order to move them selectively between the radially contracted condition and the radially expanded condition. The actuator 27 or the actuators can be made in different modes. In a non-illustrated embodiment, an actuator of pneumatic or electromechanical type can be provided, each operating on one or more of the first sectors 21a and second sectors 21b. In a further non-illustrated embodiment, at least two actuators can be provided for, respectively operating on the first sectors 21a and on the second sectors 21b.

In a preferred embodiment represented in the enclosed drawings, provision is made for a single actuator 27 operating both on the first sectors 21a, and on the second sectors 21b. Such actuator 27 can for example comprise a thrust ring 28 arranged concentrically with respect to the central axis X1, slidably guided along the latter, and axially movable with respect to the first sectors 21a and to the second sectors 21b, between the axial containment flanges 25. The thrust ring 28 is movable between a rest position in which it is approached to one of the axial containment flanges 25 (figures 2, 5 to 7 and 9), and a work position in which it is moved away from the same flange (figures 4, 8 and 10). The movement of the thrust ring 28 can for example be obtained upon action of air or another pressurised fluid, introduced through a hydraulic connector 29 borne by one of the axial containment flanges 25, preferably that at which the same thrust ring 28 is approached in the rest position.

The thrust ring 28 carries, preferably at a frustoconical portion thereof directed axially towards the interior of the drum 12, first cam elements 30a each operating on one of the first sectors 21a, and second cam elements 30b each operating on one of the second sectors 21b. The first cam elements 30a and the second cam elements 30b are circumferentially distributed in respectively alternated sequence, in accordance with the circumferential distribution of the first sectors 21a and second sectors 21b.

Each of the first cam elements 30a and of the second cam elements 30b acts against the respective first sector 21a and second sector 21b through at least one thrust surface 31a, 31b that is tilted with respect to the central axis X1, such that an axial movement of the thrust ring 28 corresponds with a radial movement of the first sectors 21a and second sectors 21b. More particularly, the rest position and the work position of the thrust ring 28 respectively correspond with the contracted condition and the expanded condition of the first sectors 21a and second sectors 21b.

In the illustrated preferred embodiment, each of the first cam elements 30a is made in an interchangeable insert 32 removably fixed along a longitudinal slot 33 arranged in the frustoconical portion of the thrust ring 28. The thrust surface 31a of the first cam element 30a is defined in at least one slide track 34 made along the interchangeable insert 32. Along the slide track 34, a slider 35 is guided that is borne by the respective first sector 21a. More particularly, each slider 35 is preferably interconnected to the base body 24a of the respective first sector 21a by at least one connecting rod 36 extended through a longitudinal slit 36a made in a radially outer portion in the interchangeable insert 32, substantially in a radial plane with respect to the central axis X1. Preferably, the slide track 34 traverses the interchangeable insert 32 perpendicular to the radial plane containing the longitudinal slit 36a. In each of the first cam elements 30a, the shaping of the slide track 34 can be such so that the thrust surface 31a has a rectilinear progression, for example having constant tilt starting from a point of minimum lift H1a, corresponding to the radially contracted condition, to a point of maximum lift H2a corresponding to the radially expanded condition.

It is also preferably provided that on the continuation of the point of maximum lift H2a, the thrust surface 31a of each of the first cam elements 30a has a terminal section 37 parallel to the central axis X1, along which slider 35 slides in a final section of the travel of the thrust ring 28 towards the work position. In this manner, each of the first sectors 21a remains substantially stopped in the radially expanded condition while the thrust ring 28 follows the final section of its travel towards the work position.

Additionally or alternatively to that described above, the thrust surface 31a of each of the first cam elements 30a can be defined on a radially outer portion of the interchangeable insert 32, acting in sliding relation against a radially inner side of the base body 24a of the respective first sector 21a.

Also the second cam elements 30b can comprise interchangeable inserts analogous to that described for the first cam elements 30a.

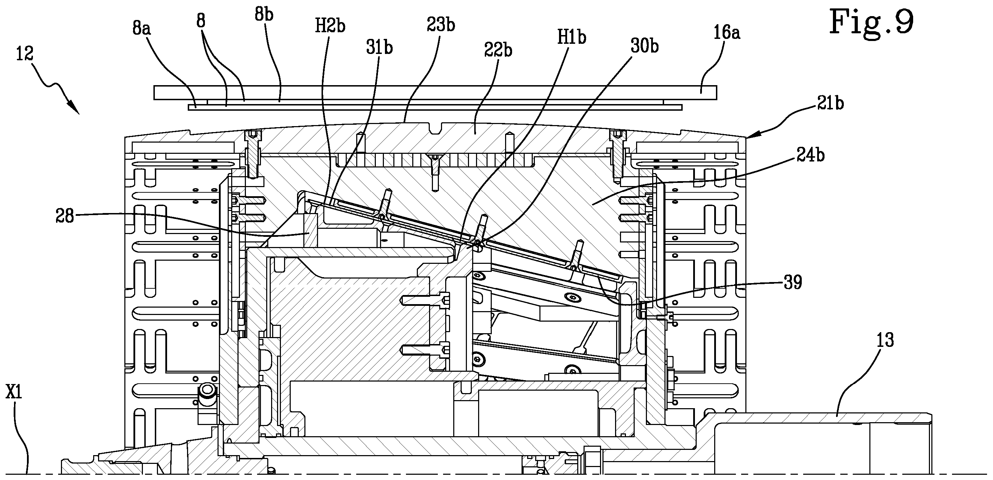

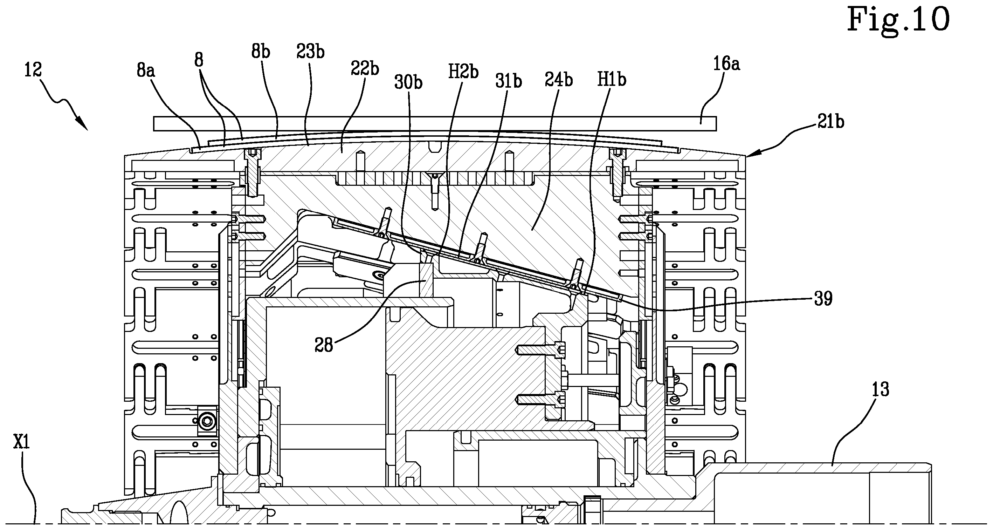

Alternatively, as provided for in the illustrated example, the second cam elements 30b can be made directly in the frustoconical portion of the thrust ring 28, each through a groove 38 which slidably engages at least one slide 39 fixed in radially inner position with respect to respective second sector 21b. The thrust surface 31b of each of the second cam elements 30b is defined along a bottom wall of the respective groove 38 and is extended preferably for the entire length thereof according to a rectilinear progression with constant tilt, between a point of minimum lift H1b and a point of maximum lift H2b close to axially opposite ends of the thrust ring 28. The slide 39 of each of the second sectors 21b can be fixed or made along a radially inner edge of the respective base body 24b, according to a rectilinear progression coinciding with that of the thrust surface 31b. In the radially contracted condition, each slide 39 acts against the respective thrust surface 31b substantially for the entire length of the slide and/or of the thrust surface themselves (figure 9). In the radially expanded condition the thrust ring 28 is axially moved with respect to the first sectors 21a and second sectors 21b, and the contact between slide 39 and thrust surface 31b it at least partially located in proximity to the point of maximum lift H2b (figure 10).

Alternatively to that described above, also the first cam elements 30a can be obtained by grooves directly made in the thrust ring 28 and cooperating with respective slides borne by the first sectors 21a, analogous to that described for the second cam elements 30b.

It is moreover convenient that the first cam elements 30a have a shaping different from that of the second cam elements 30b, such that the attainment of the expanded condition by the first sectors 21a and of the second sectors 21b occurs at respectively different moments.

For example, in the above-described embodiment solution, the thrust surface 31a of each of the first cam elements 30a has, with respect to the central axis X1, a tilt greater than that which can be encountered on the thrust surface 31b of each of the second cam elements 30b. Consequently, when the thrust ring 28 is moved towards the work position the first sectors 21a translate at a speed greater than that reached by the second sectors 21b, and reach the expanded condition when the second sectors 21b have not yet completed their travel. It can also be provided that each of the first cam elements 30a and/or of the second cam elements 30b has, along the extension thereof comprised between the point of minimum lift H1a, H1b and the point of maximum lift H2a, H2b, two or more sections having respectively different tilt with respect to the central axis X1, in order to govern the movement of each of the sectors themselves at variable speed according to a pre-established scheme, during a uniform motion of the thrust ring 28 towards the work position.

During the use of the apparatus 1, the first sectors 21a and the second sectors 21b are arranged in the contracted condition by placing the thrust ring 28 in rest position, such that the drum 12 is adapted to be engaged with the reinforcement layers 8a, 8b or another annular semifinished product, through axial insertion or by winding the annular semifinished product itself directly around the drum 12. When the reinforcement layers 8a, 8b are arranged, preferably in axially centred position, around the drum 12, the movement of the thrust ring 28 is driven in order to determine the radial expansion of the first sectors 21a and second sectors 21b towards the expanded condition.

Since the thrust surfaces 31a arranged on the first cam elements 30a have tilt greater than that of the thrust surfaces 31b of the second cam elements 30b, the first sectors 21a are moved from the contracted condition at a greater speed than that of the second sectors 21b. Consequently, during the translation of the thrust ring 28 towards the work position, the second sectors 21b reach the expanded condition after the first sectors 21a have reached the expanded condition.

Upon attainment of the expanded condition by the first sectors 21a, in fact, each slider 35 reaches and goes beyond the point of maximum lift H1a of the respective first cam element 30a, in order to then terminate its travel by following the terminal section 37 while the first sectors 21a remain in the expanded condition and the second sectors 21b continue their travel away from the central axis X1.

The attainment of the expanded condition by the first sectors 21a determines a first radial expansion of the reinforcement layers 8a, 8b, which is followed by a further set radial expansion, in respective intermediate zones interposed between the first sectors 21a, when even the second sectors 21b reach the expanded condition. Upon attaining the expanded condition, the contact surfaces 23a, 23b of the first sectors 21a and of the second sectors 21b are equidistant from the central axis X1, such that the first sectors 21a and the second sectors 21b engage the radially inner surface LS of the reinforcement layers 8a, 8b in a substantially uniform manner along the entire circumferential extension, net of possible spaces lying between the first sectors 21a and the consecutively adjacent second sectors 21b.

In the case in which the contact surfaces 23a, 23b have a curved transverse profile, the expansion of the first sectors 21a and of the second sectors 21b also determines a shaping of the reinforcement layers 8a, 8b or other annular semifinished product shaped according to a curved cross section profile, in accordance with the same contact surfaces 23a, 23b.

During the translation away from the contracted condition the thrust action of the first sectors 21a against the radially inner surface LS of the reinforcement layers 8a, 8b will be prevalent with respect to that exerted by the second sectors 21b. The latter can in fact remain slightly spaced from the reinforcement layers 8a, 8b, or act in abutment against them with a moderate pressure. The intermediate zones of the reinforcement layers 8a, 8b between one of the first sectors 21a and the next will therefore be more free to be deformed in order to adapt the shape and size of the semifinished product to the set deformation, in the absence of significant sliding against the second sectors 21b.

As clearly visible from the enclosed figures, it can be conveniently provided that the first sectors 21a and the second sectors 21b have respectively different circumferential extensions, preferably with a circumferential extension of the first sectors 21a smaller than that which can be found on the second sectors 21b.

The reduced circumferential size of the first sectors 21a with respect to the second sectors 21b increases the width of the zones of the semifinished product free to be deformed under the thrust of the first sectors 21a, further facilitating the overall expansion of the reinforcement layers 8a, 8b.

In at least one possible non-illustrated embodiment variant, the adaptation of the reinforcement layers 8a, 8b to the expansion imparted thereto can also be facilitated by use of first cam elements 30a and/or second cam elements 30b with thrust surfaces 31a, 31b each formed by two or more tracts having different tilt with respect to the central axis X1. By operating a weighted selection of the tilts of the various sections, it is in fact possible to determined, in the course of the movement from the contracted condition to the expanded condition, at least one intermediate transient in which the second sectors 21b act in thrust relationship against the radially inner surface LS with greater intensity with respect to that of the first sectors 21a, which can possibly remain spaced from said radially inner surface LS. In this transient the second sectors 21b and the first sectors 21a may possibly act selectively in contact with mutually alternated intermittence against the radially inner surface LS. In this circumstance, the radially inner surface LS alternatively comes into contact with the second sectors 21b and with the first sectors 21a. This alternation helps to free possible internal tensions that have progressively accumulated in the reinforcement layers 8a, 8b, facilitating the adaptation thereof for the purpose of the expansion.

Since the size of the radial thrust transmitted through the first sectors 21a and the second sectors 21b is mathematically correlated to the value of the tilt of the thrust surfaces 31a, 31b, a weighted selection of such values can also be aimed to optimise the thrust forces exerted by the first sectors 21a and/or by the second sectors 21b against the reinforcement layers 8a, 8b. For example, it can be provided that the thrust surface 31a, 31b of each of the first cam elements 30a and/or second cam elements 31b has a first initial section, close to the point of minimum lift H1a, H1b, having tilt greater than that of a subsequent section, close to the point of maximum lift H2a, H2b. In this manner the movement of the respective first sectors 21a and/or second sectors 21b towards the expanded position will have an initial transient in which the first sectors 21a and/or the second sectors 21b are moved away from the contracted condition at an initial expansion speed, and a subsequent transient in which the same first sectors 21a and/or second sectors 21b reach the expanded condition at a speed smaller than the initial expansion speed. At the same time, the thrust transmitted by the first sectors 21a and/or second sectors 21b upon effect of the force applied through the thrust ring 28 will be greater at the subsequent transient. It is thus possible to reduce the times required for moving the first sectors 21a and/or second sectors 21b in the initial transient, when the reinforcement layers 8a, 8b typically offer a lower mechanical resistance against the radial expansion, in order to then reduce the expansion speed in proximity to the expanded condition, when the requested thrusts are greater.

When the first sectors 21a and the second sectors 21b have reached the radially expanded condition, the application of the additional belting layer and of the tread band 9 can be determined around the reinforcement layers 8a, 8b supported by the drum 12.

However, nothing excludes that the expansion of the reinforcement layers 8a, 8b be actuated after the application of the tread band 9 and/or other structural components.

## Claims

1. Process for manufacturing annular components of tyres, comprising:
arranging a drum (12) comprising first sectors (21a) and second sectors (21b) sequentially interspersed around a central axis (X1) and radially movable between a radially contracted condition in which they are approached to the central axis (X1) and a radially expanded condition in which they are moved away from the central axis (X1);
arranging the first sectors (21a) and the second sectors (21b) in the contracted condition;
arranging, around the drum (12) in the contracted condition, at least one annular semifinished product, comprising one or more reinforcement layers (8a, 8b) that are radially superimposed on each other;
expanding the first sectors (21a) and the second sectors (21b) from the contracted condition to the expanded condition; wherein
the first sectors (21a) and the second sectors (21b) reach the expanded condition at different moments; and
in the expanded condition, the first sectors (21a) and the second sectors (21b) define an external surface of the drum (12) having a diameter greater than an internal diameter of the annular semifinished product when arranged around the drum (12) with the first sectors (21a) and the second sectors (21b) in the contracted condition, in order to impose a radial expansion for the semifinished product itself.

2. Process according to claim 1, wherein the second sectors (21b) reach the expanded condition after the first sectors (21a) have reached the expanded condition.

3. Process according to claim 1 or 2, wherein the expansion of the second sectors (21b) starts before the first sectors (21a) have reached the expanded condition.

4. Process according to one or more of the preceding claims, wherein the expansion of the first sectors (21a) and/or second sectors (21b) comprises an initial transient in which the first sectors (21a) and/or the second sectors (21b) are moved away from the contracted condition at a first expansion speed, and a subsequent transient in which the same first sectors (21a) and/or the second sectors (21b) reach the expanded condition at an expansion speed lower than that of the initial transient.

5. Process according to one or more of the preceding claims, wherein the expansion of the second sectors (21b) comprises a terminal transient during which the first sectors (21a) remain in the respective expanded condition.

6. Process according to one or more of the preceding claims, wherein the expansion of the first sectors (21a) and of the second sectors (21b) between the contracted condition and the expanded condition has at least one intermediate transient in which the second sectors (21b) act in thrust relationship against a radially inner surface (LS) of the annular semifinished product with greater intensity with respect to the first sectors (21a).

7. Process according to one or more of the preceding claims, wherein the radial expansion of the first sectors (21a) and of the second sectors (21b) between the contracted condition and the expanded condition has at least one intermediate transient in which the second sectors (21b) and the first sectors (21a) selectively act in contact against the radially inner surface (LS) of the annular semifinished product with mutually alternated intermittence.

8. Process according to one or more of the preceding claims, wherein each of the first sectors (21a) operates against a portion of the annular semifinished product having circumferential extension smaller than a circumferential extension of a portion of the annular semifinished product against which each of the second sectors (21b) operates.

9. Apparatus for manufacturing annular components of tyres, comprising:
a drum (12) comprising first sectors (21a) circumferentially distributed around a central axis (X1) and second sectors (21b) circumferentially distributed around said central axis (X1) and sequentially interspersed with respect to the first sectors (21a), wherein the first sectors (21a) together with the second sectors (21b) define a radially outer surface (TS) of the drum (12);
at least one actuator (27) operating on said first sectors (21a) and second sectors (21b) in order to move them selectively between a radially contracted condition in which they are approached to the central axis (X1), and a radially expanded condition in which the radially outer surface (TS) of the drum (12) has diameter greater than a diameter of the same radially outer surface (TS) in the contracted condition;
at least one applicator for arranging, around the drum (12) in the contracted condition, at least one annular semifinished product having an internal diameter smaller than the diameter of the radially outer surface (TS) of the drum (12) in the expanded condition;
wherein said actuator (27) is configured for bringing the first sectors (21a) and the second sectors (21b) into the expanded condition in respectively different moments.

10. Apparatus according to claim 9, wherein said actuator (27) comprises:
a thrust ring (28) arranged concentrically with respect to the central axis (X1) and axially movable with respect to the first sectors (21a) and to the second sectors (21b);
first cam elements (30a) borne by the thrust ring (28) and each operating on one of said first sectors (21a);
second cam elements (30b) borne by the thrust ring (28) and each operating on one of said second sectors (21b);
wherein the first cam elements (30a) have shape different from that of the second cam elements (30b).

11. Apparatus according to claim 10, wherein each of the first cam elements (30a) and of the second cam elements (30b) acts against the respective first sector (21a) and second sector (21b) by means of at least one thrust surface (31a, 31b) that is tilted with respect to the central axis (X1), wherein the thrust surface (31a, 31b) of each of the first cam elements (30a) and/or of the second cam elements (30b) has at least two sections having tilt that is respectively different with respect to the central axis (X1).

12. Apparatus according to one or more of the claims from 10 to 11, wherein each of the first cam elements (30a) and/or second cam elements (30b) is made in an interchangeable insert (32) that is removably engaged with the thrust ring (28).

13. Apparatus according to one or more of the claims from 11 to 12, wherein the thrust surface (31a, 31b) of each of the first cam elements (30a) and/or second cam elements (30b) is defined along a groove (38) made in the thrust ring (28).

14. Apparatus according to claim 13, wherein said groove (38) slidably engages at least one slide (39) fixed in radially inner position to the respective second sector (21b).

15. Apparatus according to one or more of the claims from 9 to 14, wherein said thrust ring (28) is slidably guided along a central shaft (13) coaxial with the central axis (X1) and axially movable between two axial containment flanges (25).

## Patentansprüche

1. Prozess zur Herstellung von ringförmigen Komponenten von Reifen, der Folgendes umfasst:
Anordnen einer Trommel (12), die erste Sektoren (21a) und zweite Sektoren (21b) umfasst, die nacheinander um eine Mittelachse (X1) herum eingestreut sind und radial zwischen einem radial zusammengezogenen Zustand, in dem sie der Mittelachse (X1) angenähert werden, und einem radial ausgedehnten Zustand, in dem sie von der Mittelachse (X1) weg bewegt werden, beweglich sind;
Anordnen der ersten Sektoren (21a) und der zweiten Sektoren (21b) in dem zusammengezogenen Zustand;
Anordnen, um die Trommel (12) in dem zusammengezogenen Zustand herum, mindestens eines ringförmigen halbfertigen Produkts, das eine oder mehrere Verstärkungsschichten (8a, 8b) umfasst, die radial übereinander gelegt sind;
Ausdehnen der ersten Sektoren (21a) und der zweiten Sektoren (21b) aus dem zusammengezogenen Zustand in den ausgedehnten Zustand; wobei
die ersten Sektoren (21a) und die zweiten Sektoren (21b) den ausgedehnten Zustand zu unterschiedlichen Zeitpunkten erreichen; und
in dem ausgedehnten Zustand die ersten Sektoren (21a) und die zweiten Sektoren (21b) eine Außenfläche der Trommel (12) definieren, die einen Durchmesser aufweist, der größer als der Innendurchmesser des ringförmigen halbfertigen Produkts ist, wenn es um die Trommel (12) herum angeordnet ist, mit den ersten Sektoren (21a) und den zweiten Sektoren (21b) in dem zusammengezogenen Zustand, um dem halbfertigen Produkt eine radiale Ausdehnung aufzuerlegen.

2. Prozess nach Anspruch 1, wobei die zweiten Sektoren (21b) den ausgedehnten Zustand erreichen, nachdem die ersten Sektoren (21a) den ausgedehnten Zustand erreicht haben.

3. Prozess nach Anspruch 1 oder 2, wobei die Ausdehnung der zweiten Sektoren (21b) beginnt, bevor die ersten Sektoren (21a) den ausgedehnten Zustand erreicht haben.

4. Prozess nach einem oder mehreren der vorstehenden Ansprüche, wobei die Ausdehnung der ersten Sektoren (21a) und/oder zweiten Sektoren (21b) einen anfänglichen Übergang umfasst, bei dem die ersten Sektoren (21a) und/oder die zweiten Sektoren (21b) von dem zusammengezogenen Zustand mit einer ersten Ausdehnungsgeschwindigkeit wegbewegt werden und einen nachfolgenden Übergang, bei dem die gleichen ersten Sektoren (21a) und/oder die zweiten Sektoren (21b) den ausgedehnten Zustand mit einer Ausdehnungsgeschwindigkeit erreichen, die niedriger ist als die des anfänglichen Übergangs.

5. Prozess nach einem oder mehreren der vorstehenden Ansprüche, wobei die Ausdehnung der zweiten Sektoren (21b) einen abschließenden Übergang umfasst, während dem die ersten Sektoren (21a) in dem jeweiligen ausgedehnten Zustand verbleiben.

6. Prozess nach einem oder mehreren der vorstehenden Ansprüche, wobei die Ausdehnung der ersten Sektoren (21a) und der zweiten Sektoren (21b) zwischen dem zusammengezogenen Zustand und dem ausgedehnten Zustand mindestens einen zwischenliegenden Übergang aufweist, in dem die zweiten Sektoren (21b) in Druckbeziehung gegen eine radial innere Fläche (LS) des ringförmigen halbfertigen Produkts mit größerer Intensität in Bezug auf die ersten Sektoren (21a) wirken.

7. Prozess nach einem oder mehreren der vorstehenden Ansprüche, wobei die radiale Ausdehnung der ersten Sektoren (21a) und der zweiten Sektoren (21b) zwischen dem zusammengezogenen Zustand und dem ausgedehnten Zustand mindestens einen zwischenliegenden Übergang aufweist, in dem die zweiten Sektoren (21b) und die ersten Sektoren (21a) selektiv in Kontakt mit der radial inneren Oberfläche (LS) des ringförmigen halbfertigen Produkts mit abwechselnden Unterbrechungen wirken.

8. Prozess nach einem oder mehreren der vorstehenden Ansprüche, wobei jeder der ersten Sektoren (21a) auf einen Abschnitt des ringförmigen halbfertigen Produkts wirkt, der eine Erstreckung in Umfangsrichtung aufweist, die kleiner ist als eine Erstreckung in Umfangsrichtung eines Abschnitts des ringförmigen halbfertigen Produkts, auf den jeder der zweiten Sektoren (21b) wirkt.

9. Einrichtung zur Herstellung von ringförmigen Komponenten von Reifen, umfassend:
eine Trommel (12), umfassend erste Sektoren (21a), die in Umfangsrichtung um eine Mittelachse (X1) herum verteilt sind, und zweite Sektoren (21b), die in Umfangsrichtung um die Mittelachse (X1) herum verteilt sind und aufeinanderfolgend in Bezug auf die ersten Sektoren (21a) eingestreut sind, wobei erste Sektoren (21a) zusammen mit den zweiten Sektoren (21b) eine radiale äußere Oberfläche (TS) der Trommel (12) definieren;
mindestens eine Betätigungsvorrichtung (27), die auf die ersten Sektoren (21a) und zweiten Sektoren (21b) wirkt, um diese selektiv zwischen einem radial zusammengezogenen Zustand, in dem sie der Mittelachse (X1) angenähert werden, und einem radial ausgedehnten Zustand zu bewegen, in dem die radiale äußere Oberfläche (TS) der Trommel (12) einen Durchmesser aufweist, der größer ist als ein Durchmesser derselben radialen äußeren Oberfläche (TS) in dem zusammengezogenen Zustand;
mindestens einen Applikator zum Anordnen, um die Trommel (12) im zusammengezogenen Zustand herum, mindestens eines ringförmigen halbfertigen Produkts, das einen Innendurchmesser aufweist, der kleiner ist als der Durchmesser der radial äußeren Fläche (TS) der Trommel (12) im ausgedehnten Zustand;
wobei die Betätigungsvorrichtung (27) dazu ausgebildet ist, die ersten Sektoren (21a) und die zweiten Sektoren (21b) zu jeweils unterschiedlichen Zeitpunkten in den ausgedehnten Zustand zu bringen.

10. Einrichtung nach Anspruch 9, wobei die Betätigungsvorrichtung (27) Folgendes umfasst:
einen Druckring (28), der in Bezug auf die Mittelachse (X1) konzentrisch und in Bezug auf die ersten Sektoren (21a) und auf die zweiten Sektoren (21b) axial beweglich angeordnet ist;
erste Nockenelemente (30a), die von dem Druckring (28) getragen werden und jeweils auf einen der ersten Sektoren (21a) wirken;
zweite Nockenelemente (30b), die von dem Druckring (28) getragen werden und jeweils auf einen der zweiten Sektoren (21b) wirken;
wobei die ersten Nockenelemente (30a) eine andere Form als die der zweiten Nockenelemente (30b) aufweisen.

11. Einrichtung nach Anspruch 10, wobei jedes der ersten Nockenelemente (30a) und der zweiten Nockenelemente (30b) gegen den jeweiligen ersten Sektor (21a) und zweiten Sektor (21b) mittels mindestens einer Druckfläche (31a, 31b), die in Bezug auf die Mittelachse (X1) geneigt ist, wirkt, wobei die Druckfläche (31a, 31b) von jedem der ersten Nockenelemente (30a) und/oder der zweiten Nockenelemente (30b) mindestens zwei Sektionen aufweist, die eine Neigung aufweisen, die in Bezug auf die Mittelachse (X1) jeweils unterschiedlich ist.

12. Einrichtung nach einem oder mehreren der Ansprüche 10 bis 11, wobei jedes der ersten Nockenelemente (30a) und/oder zweiten Nockenelemente (30b) in einem austauschbaren Einsatz (32) hergestellt ist, der entfernbar mit dem Druckring in Eingriff steht (28).

13. Einrichtung nach einem oder mehreren der Ansprüche 11 bis 12, wobei die Druckfläche (31a, 31b) jedes der ersten Nockenelemente (30a) und/oder zweiten Nockenelemente (30b) entlang einer Nut (38) definiert ist, die in dem Druckring (28) hergestellt ist.

14. Einrichtung nach Anspruch 13, wobei die Nut (38) gleitend in mindestens einen Schieber (39) eingreift, der in einer radial inneren Position an dem jeweiligen zweiten Sektor (21b) befestigt ist.

15. Einrichtung nach einem oder mehreren der Ansprüche 9 bis 14, wobei der Druckring (28) entlang einer Mittelwelle (13) koaxial mit der Mittelachse (X1) gleitend geführt wird und zwischen zwei axialen Sicherungsflanschen (25) axial beweglich ist.

## Revendications

1. Processus de fabrication de composants annulaires de pneus, comprenant :
la disposition d'un tambour (12) comprenant des premiers secteurs (21a) et des seconds secteurs (21b) séquentiellement intercalés autour d'un axe central (X1) et radialement mobiles entre un état radialement contracté dans lequel ils sont rapprochés de l'axe central (X1) et un état radialement expansé dans lequel ils sont éloignés de l'axe central (X1) ;
la disposition des premiers secteurs (21a) et des seconds secteurs (21b) dans l'état contracté ;
la disposition, autour du tambour (12) dans l'état contracté, d'au moins un produit semi-fini annulaire, comprenant une ou plusieurs couches de renfort (8a, 8b) qui sont superposées radialement les unes sur les autres ;
l'expansion des premiers secteurs (21a) et des seconds secteurs (21b) de l'état contracté à l'état expansé ; dans lequel
les premiers secteurs (21a) et les seconds secteurs (21b) atteignent l'état expansé à des moments différents ; et
dans l'état expansé, les premiers secteurs (21a) et les seconds secteurs (21b) définissent une surface externe du tambour (12) présentant un diamètre supérieur à un diamètre interne du produit semi-fini annulaire lorsqu'il est disposé autour du tambour (12) avec les premiers secteurs (21a) et les seconds secteurs (21b) dans l'état contracté, afin d'imposer une expansion radiale au produit semi-fini lui-même.

2. Processus selon la revendication 1, dans lequel les seconds secteurs (21b) atteignent l'état expansé après que les premiers secteurs (21a) ont atteint l'état expansé.

3. Processus selon la revendication 1 ou 2, dans lequel l'expansion des seconds secteurs (21b) commence avant que les premiers secteurs (21a) aient atteint l'état expansé.

4. Processus selon une ou plusieurs des revendications précédentes, dans lequel l'expansion des premiers secteurs (21a) et/ou des seconds secteurs (21b) comprend un transitoire initial dans lequel les premiers secteurs (21a) et/ou les seconds secteurs (21b) s'éloignent de l'état contracté à une première vitesse d'expansion, et un transitoire ultérieur dans lequel les mêmes premiers secteurs (21a) et/ou les seconds secteurs (21b) atteignent l'état expansé à une vitesse d'expansion inférieure à celle du transitoire initial.

5. Processus selon une ou plusieurs des revendications précédentes, dans lequel l'expansion des seconds secteurs (21b) comprend un transitoire terminal pendant lequel les premiers secteurs (21a) restent dans l'état expansé respectif.

6. Processus selon une ou plusieurs des revendications précédentes, dans lequel l'expansion des premiers secteurs (21a) et des seconds secteurs (21b) entre l'état contracté et l'état expansé présente au moins un transitoire intermédiaire dans lequel les seconds secteurs (21b) agissent en relation de poussée contre une surface radialement intérieure (LS) du produit semi-fini annulaire avec une intensité supérieure par rapport aux premiers secteurs (21a).

7. Processus selon une ou plusieurs des revendications précédentes, dans lequel l'expansion radiale des premiers secteurs (21a) et des seconds secteurs (21b) entre l'état contracté et l'état expansé présente au moins un transitoire intermédiaire dans lequel les seconds secteurs (21b) et les premiers secteurs (21a) agissent sélectivement en contact contre la surface radialement intérieure (LS) du produit semi-fini annulaire avec une intermittence mutuellement alternée.

8. Processus selon une ou plusieurs des revendications précédentes, dans lequel chacun des premiers secteurs (21a) agit contre une partie du produit semi-fini annulaire présentant une extension circonférentielle inférieure à une extension circonférentielle d'une partie du produit semi-fini annulaire contre laquelle chacun des seconds secteurs (21b) agit.

9. Appareil de fabrication de composants annulaires de pneus, comprenant :
un tambour (12) comprenant des premiers secteurs (21a) répartis circonférentiellement autour d'un axe central (X1) et des seconds secteurs (21b) répartis circonférentiellement autour dudit axe central (X1) et séquentiellement intercalés par rapport aux premiers secteurs (21a), dans lequel les premiers secteurs (21a) définissent avec les seconds secteurs (21b) une surface radialement extérieure (TS) du tambour (12) ;
au moins un actionneur (27) agissant sur lesdits premiers secteurs (21a) et seconds secteurs (21b) afin de les déplacer sélectivement entre un état radialement contracté dans lequel ils sont rapprochés de l'axe central (X1), et un état radialement expansé dans lequel la surface radialement extérieure (TS) du tambour (12) présente un diamètre supérieur à un diamètre de la même surface radialement extérieure (TS) dans l'état contracté ;
au moins un applicateur pour disposer, autour du tambour (12) dans l'état contracté, au moins un produit semi-fini annulaire présentant un diamètre interne inférieur au diamètre de la surface radialement extérieure (TS) du tambour (12) dans l'état expansé ;
dans lequel ledit actionneur (27) est configuré pour amener les premiers secteurs (21a) et les seconds secteurs (21b) dans l'état expansé à des moments respectivement différents.

10. Appareil selon la revendication 9, dans lequel ledit actionneur (27) comprend :
une bague de poussée (28) disposée concentriquement par rapport à l'axe central (X1) et mobile axialement par rapport aux premiers secteurs (21a) et aux seconds secteurs (21b) ;
des premiers éléments de came (30a) portés par la bague de poussée (28) et agissant chacun sur l'un desdits premiers secteurs (21a) ;
des seconds éléments de came (30b) portés par la bague de poussée (28) et agissant chacun sur l'un desdits seconds secteurs (21b) ;
dans lequel les premiers éléments de came (30a) présentent une forme différente de celle des seconds éléments de came (30b).

11. Appareil selon la revendication 10, dans lequel chacun des premiers éléments de came (30a) et des seconds éléments de came (30b) agit contre le premier secteur (21a) et le second secteur (21b) respectifs au moyen d'au moins une surface de poussée (31a, 31b) qui est inclinée par rapport à l'axe central (X1), dans lequel la surface de poussée (31a, 31b) de chacun des premiers éléments de came (30a) et/ou des seconds éléments de came (30b) présente au moins deux sections présentant une inclinaison qui est respectivement différente par rapport à l'axe central (X1).

12. Appareil selon une ou plusieurs des revendications 10 à 11, dans lequel chacun des premiers éléments de came (30a) et/ou des seconds éléments de came (30b) est réalisé dans un insert interchangeable (32) qui est engagé de manière amovible avec la bague de poussée (28).

13. Appareil selon une ou plusieurs des revendications 11 à 12, dans lequel la surface de poussée (31a, 31b) de chacun des premiers éléments de came (30a) et/ou des seconds éléments de came (30b) est définie le long d'une rainure (38) réalisée dans la bague de poussée (28).

14. Appareil selon la revendication 13, dans lequel ladite rainure (38) vient en prise de manière coulissante avec au moins une glissière (39) fixée en position radialement intérieure au second secteur respectif (21b).

15. Appareil selon une ou plusieurs des revendications 9 à 14, dans lequel ladite bague de poussée (28) est guidée de manière coulissante le long d'un arbre central (13) coaxial à l'axe central (X1) et mobile axialement entre deux brides de confinement axiales (25).
